# EUROPÄISCHE PATENTANMELDUNG

(11) **EP 3 797 850 A1**
(43) Veröffentlichungstag der Anmeldung: **31.03.2021**
(21) Anmeldenummer: 19199138.9
(22) Anmeldetag: 24.09.2019
(51) Int. Cl.: B01D 46/00, B01D 46/52

(54) **FILTERELEMENT MIT MATERIALSCHWÄCHUNG AN FALTINNENKANTEN**

(71) Anmelder: Carl Freudenberg KG, 69469 Weinheim (DE)
(72) Erfinder: HAEFNER, Uwe, 77694 Kehl (DE); Blauth, Sascha, 67688 Rodenbach (DE); Hintenlang, Dieter, 69518 Abtsteinach (DE); Kluge, Jens, 67822 Mannweiler-Coelln (DE); Uenen, Ilker, 67547 Osthofen (DE)

(57) **Zusammenfassung**

Die Erfindung betrifft ein Filterelement (100) mit einem leporelloartig gefaltetem Filtermedium (1). Erfindungsgemäß wurde es als vorteilhaft erkannt, dass im Bereich der Faltkanten (2) auf der Innenseite einer jeweiligen Faltkante (2) eine Materialschwächung (4) vorliegt.

Dadurch wird in vorteilhafter Weise ein Filterelement geschaffen, welches exakte Faltungen aufweist und einfach in der Herstellung ist.

## Beschreibung

Die Erfindung betrifft ein Filterelement gemäß dem Oberbegriff von Anspruch 1.

### Stand der Technik

Aus dem Stand der Technik ist es bereits bekannt bei zu faltenden Filtermedien im Bereich der Faltlinie kontinuierliche, d.h. durchgehende Materialschwächungen vorzusehen. So ist beispielsweise in der EP 0 965 549 A2 beschrieben, dass ein Materialabtrag von 1/6 bis 1/3 der Materialstärke des Filtermediums betragen kann. Die Materialabtragung wird durch zwei Laserstrahleinrichtungen realisiert, welche oberhalb und unterhalb der Bahn des Filtermediums angebracht sind. Die Materialabtragung erfolgt im Wechsel auf der Oberseite und der Unterseite des Filtermediums, jeweils jedoch immer an der Faltaußenkante, um später eine Zick-Zack Faltung des Filtermediums zu einem Faltenbalg zu erleichtern.

Nachteilig an dieser Lösung ist, dass dicke und insbesondere mehrlagige Materialien weiterhin schwierig zu falten sind, bzw. keine exakten Faltlinien ausgebildet werden können. Beim Faltprozess werden im Fall von mehrlagigen Materialien häufig innenliegende, eigentlich schützenswerte Schichten, wie z.B. Sorbtionsschichten oder Membranen, stark mechanisch beansprucht und es kann zu funktionellen Schädigungen kommen. Bei Filtermedien, welche rieselfähige Inhaltsstoffe aufweisen, wie beispielsweise Aktivkohle, wird durch die Materialabtragung die Schutzschicht um den rieselfähigen Inhaltsstoff herum beschädigt, sodass dieser entweichen kann.
Bei dicken Materialien kann so zwar die Bruchkante an der Faltaußenkante schön vorbereitet werden. An der Faltinnenkante entstehen auf Grund von Materialverdrängung jedoch Wulste. Diese beeinträchtigen den Faltprozess stark und die Faltenbalge weisen ungleichmäßige Faltungen auf.

### Aufgabenstellung

Aufgabe der vorliegenden Erfindung ist es ein Filterelement zu schaffen, welches exakte Faltungen aufweist und einfach in der Herstellung ist.

### Technische Lösung

Gelöst wird diese Aufgabe durch ein Filterelement mit den Merkmalen von Anspruch 1.

Erfindungsgemäß wurde es als vorteilhaft erkannt, Materialschwächungen nur lokal auf der Innenseite der Faltkanten in das Filtermedium einzubringen.

Das erfindungsgemäße Filterelement dient insbesondere zur Filtration eines Luftstroms und besitzt ein leporelloartig, zu einem Faltenbalg gefaltetes Filtermedium mit einer Vielzahl von insbesondere parallel zueinander ausgerichteten Faltkanten und zwischen je zwei Faltkanten liegenden Faltflächen, welche auch als Faltabschnitte bezeichnet werden können. Das Filtermedium besitzt mindestens eine Schicht, kann jedoch auch mehrere Schichten aufweisen, die zusammen eine Dicke D ergeben. Erfindungsgemäß sind die Materialschwächung nur im Bereich der Faltkanten an der Faltinnenkante angebracht.
Als Faltinnenkante der Faltkante wird der Scheitelpunkt eines nicht-stumpfen Winkels angesehen, welcher beim Falten des Filtermediums durch aneinander angrenzende Faltflächen gebildet wird.

Ein derartiges Filterelement hat den Vorteil, dass aufgrund der lokalen Materialschwächung an der Faltinnenkante eine jeweilige Faltkante des Filtermediums gut vorbereitet und nachfolgend sehr exakt gefaltet werden kann. Auch bei dicken und mehrlagigen Filtermedien kann so ein exaktes Faltverhalten auf materialschonende Weise vorgegeben und können sehr exakte Faltkanten erreicht werden. Es wurde überraschender Weise herausgefunden, dass das Einbringen einer Bruchkante an der Faltaußenkante nicht so wichtig für die Faltqualität von Filtermedien ist. Der Effekt einer Materialschwächung an der Faltinnenkante und damit das Verhindern eines Materialüberschusses an der Faltinnenkante, beispielsweise in Form eines Wulstes, ist jedoch bemerkenswert und vorrangig für eine gute Faltqualität.

Die Materialschwächungen können entweder kontinuierlich oder diskontinuierlich sein. Kontinuierlich meint, dass die Materialschwächung durchgehend ist, in Form einer ununterbrochenen Linie. Diskontinuierlich meint, eine nicht linienförmig-zusammenhängende sondern beabstandete, z.B. punktförmige oder abschnittsweise variierende Materialschwächung. Unter einer Materialschwächung wird dabei eine Reduzierung der Dicke des Filtermediums durch Abtrag oder Verdichtung verstanden.

Vorteilhaft ist es, wenn zwischen einer Materialschwächung und einer auf einer Faltkante benachbart liegenden nächsten Materialschwächung des Filtermediums das Filtermedium seine ursprüngliche, nominale Dicke D aufweist und damit dort ungeschwächt ist. In anderen Worten: neben einem Bereich einer Materialschwächung liegt ein ungeschwächter Bereich. Damit bleibt die Stabilität des Filtermediums gewahrt und wird die Gefahr gebannt, dass das Filtermedium durch die Materialschwächungen durchtrennt würde.

In möglichen Weiterbildungen des erfindungsgemäßen Filterelements weisen die Außenkonturen der diskontinuierlichen Materialschwächungen die Form eines Kreises, eines Langlochs, einer Ellipse und/oder eines Streifens auf. Besonders bevorzugt sind solche Formen, welche fertigungstechnisch einfach realisierbar sind.

Die maximale Erstreckung der Materialschwächungen quer zu den Faltkanten ist abhängig von der Dicke des Filtermediums zu wählen. Die maximale Erstreckung der Materialschwächungen können für gängige Dicken des Filtermediums beispielsweise eine maximale Erstreckung von 4 mm quer zu den Faltkanten besitzen. Dadurch wird sichergestellt, dass durch die Materialschwächungen keine zu großen Öffnungen in dem Filtermedium entstehen, welche in Bypässen des Filterelements resultieren könnten sondern, dass die Materialschwächungen durch die Faltflächen nach erfolgtem Faltvorgang verschlossen werden.

In einer besonders vorteilhaften und daher bevorzugten Weiterbildung weist das Filtermedium des Filterelements mindestens zwei Schichten auf, z.B. eine Partikelfilterdecklage und eine Aktivkohlelage oder es ist dreischichtig aufgebaut, z.B. aus einer Trägerlage, einer Membranschicht und einer Abdecklage. Durch das Vorsehen einer Mehrzahl von Schichten im Filtermedium können die Filtrationseigenschaften des Filterelements an die Bedürfnisse des jeweiligen Einsatzgebietes besonders gut angepasst werden.

Es wurde als vorteilhaft erkannt, die Materialschwächungen nur in einer Schicht des Filtermediums vorzusehen, nämlich in einer innenliegenden Schicht des Filtermediums. Weist das Filtermedium beispielsweise eine Partikelfilterdecklage und eine Aktivkohlelage auf, so können die Materialschwächungen ausschließlich in der Partikelfilterdecklage vorgesehen sein. Weist das Filtermedium eine Trägerlage, eine Membranschicht und eine Abdecklage auf, so können die Materialschwächungen ausschließlich in der Trägerlage eingebracht sein. Dadurch wird sichergestellt, dass schützenswerte Schichten nicht beschädigt werden.

In einer ersten Variante des erfindungsgemäßen Filterelements realisieren die Materialschwächungen eine Reduzierung der Dicke in mindestens einer der Schichten des Filtermediums um 30 bis 90%.
In einer zweiten Variante realisieren die Materialschwächungen Durchbrechungen zumindest einer Schicht des Filtermediums, d.h., es erfolgt eine Reduktion der Dicke mindestens einer Schicht des Filtermediums um 100%.

Es wurde überraschend festgestellt, dass trotz dieser Materialschwächung kein Funktionsverlust des Filterelements hinsichtlich seiner Filtrationseigenschaften auftritt. Im Bereich der Materialschwächungen an den Faltkanten entstehen keine Bypässe, da in diesem Knickbereich der Faltenspitzen die Materialschwächungen durch das Falten wieder verschlossen werden. In anderen Worten: durch den Vorgang des Faltens wird Filtermedium von den Faltflächen in den Bereich der Materialschwächungen verbracht und die Materialschwächungen dadurch verschlossen. Es wurde überraschend festgestellt, dass auch bei mehrschichtigen Filtermedien trotz der Materialschwächungen keine Sorbtionspartikel aus mittig oder tiefer liegenden Schichten austreten können.

Als besonders vorteilhaft und daher bevorzugt wurde erkannt, wenn die Faltflächen jeweils in einem spitzen Winkel zueinander ausgerichtet sind, insbesondere in einem Winkel von unter 25 Grad.

In einer weiteren Variante des Filterelements können auch unterschiedliche Arten von Materialschwächungen wie oben zuvor beschrieben vorliegen, d.h., die Materialschwächungen können durch Reduzierungen der Dicke der Schicht bzw. Durchbrechungen mindestens einer Schicht realisiert sein.

Das Filtermedium kann bevorzugt aus einem Vliesstoff gefertigt sein.

Die Erfindung betrifft auch ein Verfahren zur Herstellung eines Filterelements wie obenstehend beschrieben, wobei in einem ersten Schritt ein Laserstrahl relativ zu dem Filtermedium bewegt wird und die Materialschwächung im Bereich der Faltinnenkanten der Faltkanten erzeugt und in einem zweiten Schritt das Filtermedium entlang seiner Faltkanten gefaltet wird.

Die beschriebene Erfindung und die beschriebenen vorteilhaften Weiterbildungen der Erfindung stellen auch in Kombination miteinander - soweit dies technisch sinnvoll ist - vorteilhafte Weiterbildungen der Erfindung dar.

Hinsichtlich weiterer Vorteile und in konstruktiver und funktioneller Hinsicht vorteilhafter Ausgestaltungen der Erfindung wird auf die Unteransprüche sowie die Beschreibung von Ausführungsbeispielen unter Bezugnahme auf die beiliegenden Figuren verwiesen.

### Ausführungsbeispiel

Die Erfindung soll an Hand beigefügter Figuren noch näher erläutert werden. Einander entsprechende Elemente und Bauteile sind in den Figuren mit gleichen Bezugszeichen versehen. Zugunsten einer besseren Übersichtlichkeit der Figuren wurde auf eine maßstabsgetreue Darstellung verzichtet.
Es zeigen in schematischer Darstellung
- Fig. 1: Filtermedien mit unterschiedlicher Materialschwächung
- Fig. 2: eine weitere alternative Materialschwächung
- Fig. 3: ein Filtermedium mit einer Materialschwächung an der Faltinnenkante in gefaltetem Zustand
- Fig. 4: ein zweischichtiges Filtermedium mit einer Materialschwächung
- Fig. 5: ein dreischichtiges Filtermedium mit einer Materialschwächung
- Fig. 6: ein Filterelement

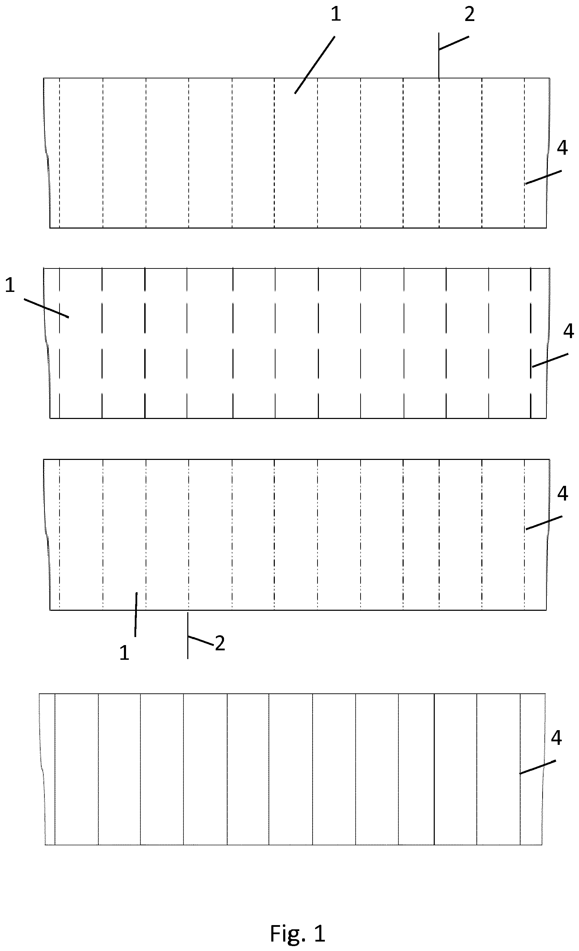

In Fig. 1 sind vier unterschiedliche Varianten von Materialschwächungen 4 dargestellt, welche jeweils in ein Filtermedium 1 im Bereich von nachfolgend zu erzeugenden Faltkanten 2 eingebracht sind. Im obersten Beispiel sind die Materialschwächungen 4 in Form einer Perforation ausgeführt. Im zweiten Beispiel sind die Materialschwächungen 4 in Form von Schlitzen ausgeführt. Im dritten Beispiel sind die Materialschwächungen 4 in einer Form von sich abwechselnden Löchern und Schlitzen ausgeführt.
Die Vielzahl der Materialschwächungen 4 sind dabei diskontinuierlich in das Filtermedium 1 eingebracht, d.h. die jeweiligen Materialschwächungen 4 sind nicht linienförmig-durchgehend sondern beabstandet zueinander.
Im untersten Beispiel sind die Materialschwächungen 4 kontinuierlich und linienförmig als Schlitze ausgeführt.

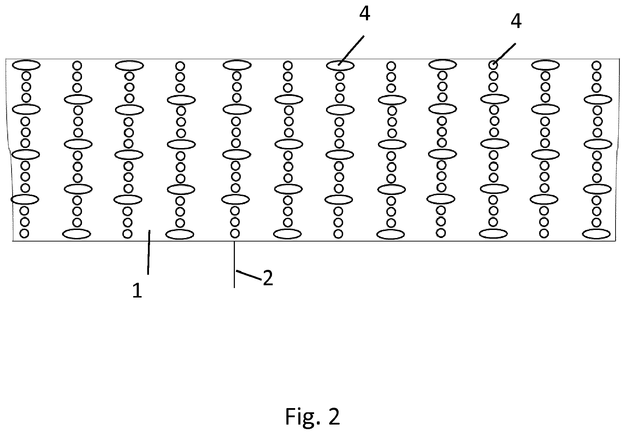

In Fig. 2 ist ein vergrößerter Ausschnitt aus einem Filtermedium 1 dargestellt, in welches ebenfalls diskontinuierliche Materialschwächungen 4 im Bereich von nachfolgend durch Falten zu erzeugenden Faltkanten 2 eingebracht sind. Die Materialschwächungen haben dabei die Form von Ellipsen und runden Löchern. Es ist zu erkennen, dass das Filtermedium 1 zwischen einer ersten Materialschwächung 4 und einer auf der Faltkante 2 liegenden benachbarten, nächsten Materialschwächung 4 ungeschwächt ist.

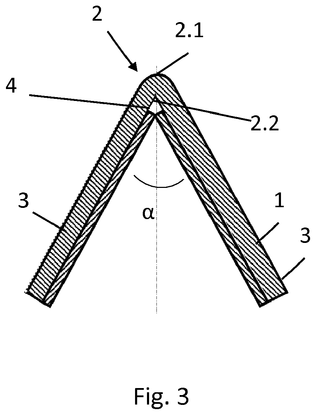

Das Filtermedium 1 gemäß Fig. 3 wurde im Bereich einer Faltkante 2 gefaltet. Die Materialschwächung 4 im Filtermedium 1 wurde nur an der Faltinnenkante 2.2 realisiert; an der Faltaußenkante 2.1 ist das Filtermedium 1 unversehrt. Die Materialschwächung 4 liegt also dort, wo in dem Filtermedium 1 durch Falten die Faltinnenkante 2.2 der Faltkante 2 zum Liegen kommt. Durch den Vorgang des Faltens des Filtermediums wird die Faltkante 2 gebildet und werden benachbarte Faltflächen 3 in einem spitzen Winkel α zueinander ausgerichtet. Der Winkelscheitel liegt an der Faltinnenkante 2.2 Zur besseren Erkennbarkeit wurde ein relativ großer Winkel gewählt. In der Praxis wird der Winkel eher im Bereich von unter 25° liegen.

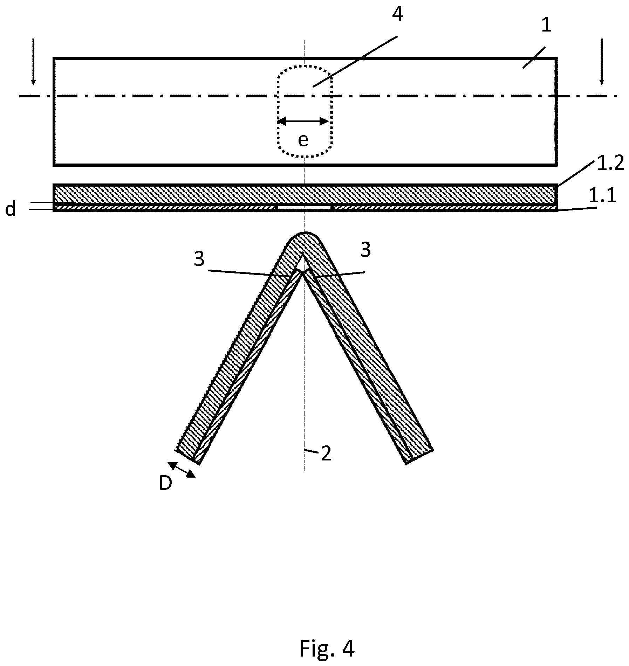

In der Fig. 4 wird dies näher beschrieben. In der Figur ist ein Filtermedium 1 in einer ungefalteten Ansicht, einer ungefalteten Draufsicht und einer gefalteten Ansicht dargestellt. Dabei ist nur ein Ausschnitt aus einem Filtermedium 1 dargestellt.
Es ist das Filtermedium 1 zweilagig ausgeführt. Es besitzt eine erste Schicht 1.1, welche beispielsweise als Partikelfilterdecklage ausgeführt sein kann und eine zweite Schicht 1.2, welche beispielsweise als Aktivkohlelage ausgeführt sein kann. Die erste Schicht 1.1 wurde mit Materialschwächungen 4 versehen, welche als Durchbrechungen realisiert sind. D.h., die erste Schicht 1.1, welche eine Schichtdicke d aufweist, wurde durch die Materialschwächungen 4 komplett entfernt. Die Materialschwächungen 4 weisen dabei die Form eines Langlochs auf mit einer Quererstreckung e. Trotz der als Durchbrechung ausgeführten Materialschwächung 4 in der ersten Schicht 1.1 des Filtermediums 1 liegt nach erfolgtem Faltvorgang kein Bypass in dem Filtermedium 1 vor und die Materialschwächung 4 wurde durch die Faltflächen 3 verschlossen.

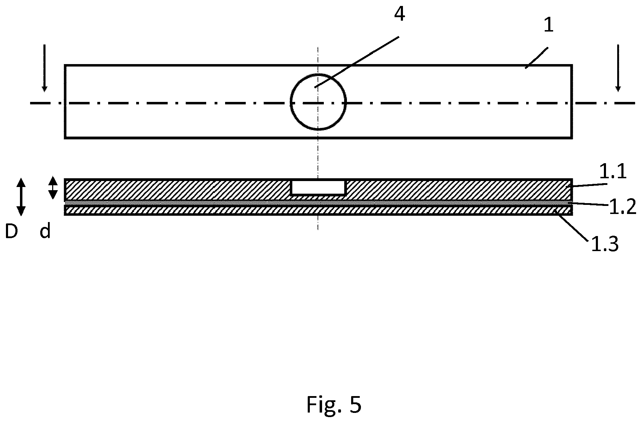

In Fig. 5 ist eine Variante des Filtermediums 1 dargestellt, welche drei Schichten aufweist, mit einer Dicke D aller Schichten zusammen. Die erste Schicht 1.1 kann als Trägerlage ausgeführt sein, die zweite Schicht 1.2 als Membranschicht und die dritte Schicht 1.3 als Abdecklage. Die erste Schicht 1.1 wurde dabei mit Materialschwächungen 4 in kreisrunder Form versehen. Die Materialschwächungen 4 sind dabei als Reduzierungen d der Schichtdicke der Schicht 1.1 realisiert. Indem die erste Schicht 1.1 im Bereich der Materialschwächungen 4 nicht komplett entfernt wurde, liegt die zweite Schicht 1.2 nicht frei und bleibt beidseitig durch die Schichten 1.1 und 1.3. geschützt. Die Faltung des Filtermediums 1 erfolgt analog der Darstellung von Fig. 4.

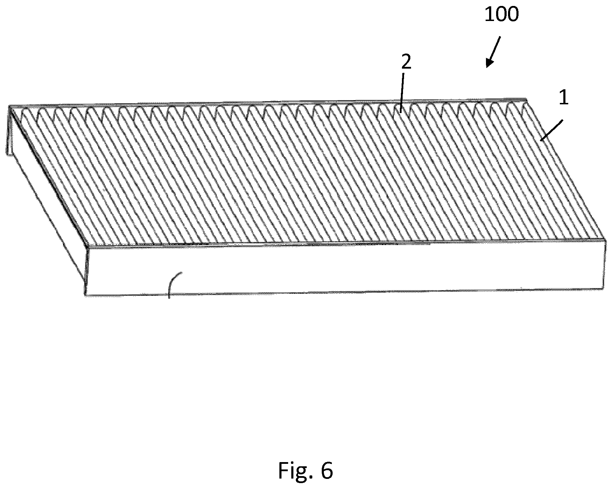

In Fig. 6 ist ein Filterelement 100 dargestellt, welches einen Faltenbalg besitzt, welcher aus einem leporelloartig gefaltetem Filtermedium 1 gebildet wurde. Zur Erhöhung der Stabilität des Filtermediums kann der Faltenbalg in einen Rahmen eingesetzt sein, welcher den Faltenbalg an vier Seiten umgibt. Das Filterelement 100 kann von einem Luftstrom, der nicht näher dargestellt ist, von oben nach unten durchströmt werden und dabei eine Filtration des Luftstroms bewirken.

### Bezugszeichenliste

- 1: Filtermedium
- 1.1: erste Schicht
- 1.2: zweite Schicht
- 1.3: dritte Schicht
- 2: Faltkante
- 2.1: Faltaußenkante
- 2.2: Faltinnenkante
- 3: Faltfläche
- 4: Materialschwächung

- 100: Filterelement

- D: Dicke Filtermedium
- d: Schichtdicke
- e: Quererstreckung Materialschwächung

- α: Winkel zwischen Faltflächen

## Patentansprüche

1. Filterelement (100) mit einem leporelloartig gefaltetem Filtermedium (1), wobei das Filterelement (100) eine Vielzahl von Faltkanten (2) und zwischen je zwei Faltkanten (2) liegenden Faltflächen (3) aufweist, wobei das Filtermedium (1) eine Dicke (D) besitzt und mindestens eine Schicht (1.1, 1.2, 1.3) aufweist,
**dadurch gekennzeichnet, dass**
im Bereich der Faltkanten (2) eine Materialschwächung (4) nur an den Faltinnenkanten (2.2) vorliegt.

2. Filterelement nach Anspruch 1, **dadurch gekennzeichnet, dass**
die Materialschwächungen (4) kontinuierlich sind.

3. Filterelement nach Anspruch 1, **dadurch gekennzeichnet, dass**
die Materialschwächungen (4) als Vielzahl von diskontinuierlichen Materialschwächungen (4) ausgeführt sind, wobei die Außenkontur der Materialschwächungen (4) insbesondere die Form eines Kreises, eines Langlochs, einer Ellipse und/ oder eines Streifens hat.

4. Filterelement nach einem der vorangehenden Ansprüche **dadurch gekennzeichnet, dass**
die Materialschwächungen (4) eine maximale Erstreckung (e) von 4 mm quer zu den Faltkanten (2) aufweisen.

5. Filterelement nach einem der vorangehenden Ansprüche **dadurch gekennzeichnet, dass**
das Filtermedium (1) mindestens zwei Schichten (1.1, 1.2, 1.3) aufweist.

6. Filterelement nach Anspruch 5 **dadurch gekennzeichnet, dass**
die Materialschwächungen (4) sich in nur einer Schicht (1.1) befinden.

7. Filterelement nach einem der vorangehenden Ansprüche **dadurch gekennzeichnet, dass**
die Materialschwächungen (4) eine Reduzierung (d) der Dicke einer Schicht (1.1) des Filtermediums (1) um 30 bis 90% realisieren.

8. Filterelement nach einem der Ansprüche 5 bis 6 **dadurch gekennzeichnet, dass**
Materialschwächungen (4) Durchbrechungen einer Schicht (1.1) des Filtermediums (1) realisieren.

9. Filterelement nach Anspruch 7 und Anspruch 8 **dadurch gekennzeichnet, dass**
unterschiedliche Arten von Materialschwächungen (4) gemäß den Ansprüchen 7 und 8 vorliegen.

10. Filterelement nach einem der vorangehenden Ansprüche **dadurch gekennzeichnet, dass**
die Faltflächen (3) jeweils in einem spitzen Winkel (a) zueinander ausgerichtet sind, insbesondere in einem Winkel von unter 25 Grad.

11. Filterelement nach einem der vorangehenden Ansprüche **dadurch gekennzeichnet, dass**
das Filtermedium (1) aus einem Vliesstoff ist.

12. Verfahren zur Herstellung eines Filterelements nach einem der vorangehenden Ansprüche
wobei in einem ersten Schritt ein Laserstrahl relativ zu dem Filtermedium (1) bewegt wird und die Materialschwächungen (4) im Bereich der Faltinnenkanten (2.2) der Faltkanten (1) erzeugt werden und
wobei in einem zweiten Schritt das Filtermedium (1) entlang seiner Faltkanten (2) gefaltet wird.
